# EUROPEAN PATENT APPLICATION

(11) **EP 1 686 676 A1**
(43) Date of publication of application: **02.08.2006**
(21) Application number: 05002036.1
(22) Date of filing: 01.02.2005
(51) Int. Cl.: H02K 5/15, H02K 15/16

(54) **Brushless DC motor and method of assembling a brushless DC motor**

(71) Applicant: PORTESCAP, 2301 La Chaux-de-Fonds (CH)
(72) Inventor: Birkicht, Albert, 3296 Arch (CH)
(74) Representative: Vossius & Partner

(57) **Abstract**

The present invention relates to brushless DC motors. In particular, the present invention relates to a method of assembling a brushless DC motor, comprising the steps of determining the optimum alignment position of the bearings and the shaft with reference to resulting noise and/or vibration level; and subsequently fixing the flanges attached to the bearings to the stator of the motor at the determined optimum alignment position.

## Description

### Field of the invention

The present invention relates to brushless DC motors. In particular, the present invention relates to a method of assembling a brushless DC motor.

### Background of the invention

In rotary electric machines, like brushless DC motors, the rotating component, i.e. the rotor is typically received in a front and a rear bearing assembly. This requires proper and exact alignment of the bearings and the rotor shaft relative to the stator.

Conventional brushless DC motors suffer from quality problems in terms of noise and vibration caused by misalignment of the rotor relative to the stator. In order to obtain motors that are more quiet during operation and that cause less vibrations, conventional approaches attempted to improve rotor balancing and bearing quality, to use different bearing lubricants, and to use parts with higher precision to achieve better shaft and bearing alignment during assembly of the motor.

Traditionally, alignment of the shaft and the bearings is performed with reference to the stator housing after assembly of the motor is completed. Thus, only tolerances with respect to the stator housing were measured and taken as a basis for alignment. However, using this conventional approach, exact alignment of the right and left ends of the shaft can hardly be achieved.

### Summary of the invention

The object of the present invention is to provide an improved brushless DC motor having lower noise and lower vibration levels.

It is a further object of the present invention to provide an improved assembly method of a brushless DC motor.

These objects are solved with the features of the claims.

The basic concept of the present invention is to perform alignment of the bearings and the shaft during assembly, and to fix the flanges to the stator only after the optimum alignment position has been determined and reached.

Thus, according to a first aspect of the present invention, an assembly method of a brushless DC motor comprises the steps of (a) determining the optimum alignment position of the shaft with reference to the stator; and (b) subsequently fixing the flanges to the stator of the motor at the determined optimum alignment position.

The alignment of the bearings and the shaft is preferably performed mechanically (embodiment 1) with a view to reduced noise and/or vibrations.. Preferably, the mechanical alignment according to the present invention utilizes an axial guide element, extending along the axis of the shaft of the motor. Such axial guide element is preferably provided in the air gap between stator and rotor in order to properly align the shaft with reference to the inner diameter of the stator. Alternatively, the axial guide element is provided at the outside of the motor corresponding to the inner diameter of the stator. Thus, the axial guide element provides a reference for alignment of the shaft relative to the inner diameter of the stator package. Once the optimum alignment position is determined and achieved, the bearings are fixed to the respective flange, and the flanges are fixed to the stator, for example by appropriate glues.

Alternatively, alignment of the bearings and the shaft is performed taking into consideration the effects of alignment on noise and/or vibration levels (alternative embodiment 2). Thus, during the alignment process according to this embodiment, the motor is operated during alignment and noise and/or vibration levels are constantly or intermittently measured. With reference to the measured results of noise and/or vibration, the optimum alignment position is determined. Once the optimum alignment position is determined and achieved, the bearings are fixed to the respective flange, and the flanges are fixed to the stator, for example by appropriate glues.

In the context of the present invention, the term "optimum alignment position" refers the position of the bearings and shaft relative to the stator resulting in minimum noise level and/or minimum vibration level. In case noise and vibration are considered together, the "optimum alignment position" is either that position where both noise and vibration are at a minimum, or, in case these minima do not occur at the same bearing/shaft position, a compromise between reduced noise and reduced vibration level.

Preferably, alignment is made on an alignment plate, for example a x-/y-plate. The motor to be assembled and aligned is arranged on such x-/y-plate in z-direction, i.e., with the shaft extending in z-direction. According to the alternative embodiment, alignment is performed during operation. Thus. the position of the bearings with the shaft is then varied in at least one of two dimensions (x- and y- direction) while the shaft is rotating. Preferably, the variations follow a predetermined pattern of movement in x- and y-direction. The predetermined patterns selected for a specific motor are preferably dependent on motor characteristics, for example size of the motor. Concurrently, vibrations and/or noise are measured so that a vibration and/or noise profile can be obtained in x- and y-direction. Once the optimum alignment position is determined or reached, the adhesive or glue is filled into the respective gaps between flange and stator and/or bearing and flange. Finally, the motor is put in an oven to bake the glue. As an alternative fixing method, laser welding is used.

Preferably, during alignment, the motor is operated at different speeds since resonance characteristics vary with variations in speed. Thus, the measured vibration and/or noise profile is determined also in dependence of the speed of the motor. In other words, due to the variations in speed a further profile is obtained reflecting the dependence of noise and/or vibrations on motor speed. Therefore, preferably a three-dimensional graph (variations in x-and y-direction and in speed) or a plurality of two-dimensional graphs at different speeds is obtained. The alignment dependent on speed variations is thus not a mere mechanical alignment but also takes magnetic unbalances into account. This results in an even better optimised alignment of the rotor to the stator.

Preferably, the vibration level is determined using an acceleration sensor.

Preferably, noise of the motor is measured using an audio test instrument that measures sound pressure levels. Such audio test instrument is placed at a defined distance to the motor. Furthermore, any surrounding noise is held in a controlled condition.

According to a second aspect of the present invention, a brushless DC motor comprises a stator, a rotor having a shaft sharing a common axis with the stator, a first and a second bearing for journaling the shaft of the rotor, and a first and a second end flange for mounting the first and second bearing to the stator, wherein the first and second end flanges and/or the first and second bearings are sized and shaped to provide freedom of radial and axial movement for alignment of the bearings and shaft.

Preferably, the first and second end flanges and/or the first and second bearings are sized and shaped to provide freedom of radial and axial movement for alignment of the bearings and shaft during rotation of the shaft.

Optionally, the motor according to the present invention comprises a housing in form of an outer stator tube. However, such housing is dispensable as it is not required as a reference for shaft alignment.

Preferably, the bearings are connected to the flanges, and the flanges are connected to the stator after alignment by means of a glue or alternative bonding method, such as laser welding. Alternatively, the bearings are attached to the flanges prior to alignment, and only the connection of the flanges to the stator is made after the alignment process.

The bearings are preferably press-fit or glued or welded onto the shaft at or adjacent its opposite ends.

The present invention is advantageous in that a substantially improved alignment of the bearings and the shaft during assembly of the motor, i.e., improved centering, is achieved. This results in lower noise and lower vibrations during use of the motor. This also results in lower friction in the bearings, which, in turn, increases lifetime of the bearings end the entire motor. A further advantage associated with the present invention is the possibility of higher motor speeds. Also, lower operating temperatures due to lower friction can be achieved. Furthermore, lower losses, i.e. lower operating temperatures and lower (electric) noise is achieved due to the fact that the dynamic balancing (i.e., measuring vibration) takes into account magnetic imperfections and optimizes them as well (trade-off with mechanical imperfections).

A further advantage of the present invention is that the entire motor can be simplified and weight can be reduced. Since the outer housing tube that was conventionally necessary for alignment is no longer required, it can be dispensed of. This reduces the cross-sectional size of the entire motor and makes it lighter. Furthermore, it is no longer necessary to define tight tolerances between flanges and housing. With the alignment during operation according to the present invention, the end flanges and the bearings are even designed to have sufficient freedom in terms of radial and axial movement so that the position of the bearings and shaft can easily be changed during the alignment process in order to determine the optimum position.

### Brief description of the drawing

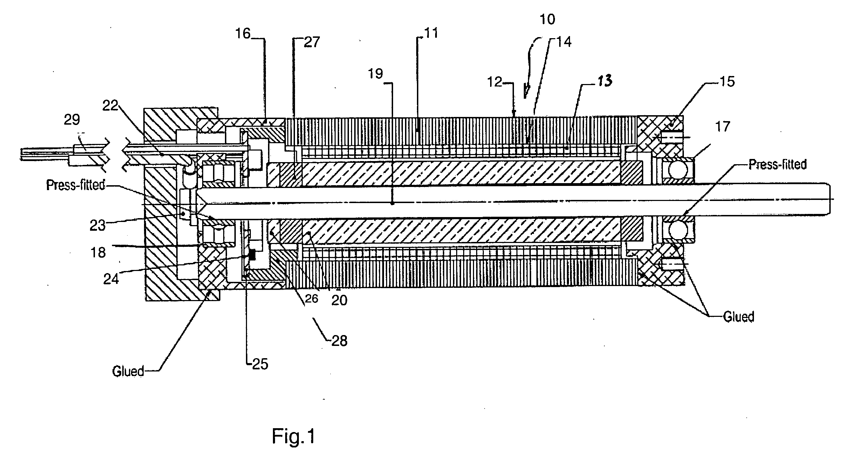

The invention is now described in more detail with reference to the accompanying drawings, in which
- Fig. 1: shows a cross-sectional view of the brushless DC motor according to the present invention.

### Detailed description of the preferred embodiment

Fig. 1 shows a cross-sectional view of a brushless DC motor assembled in accordance with the present invention.

The brushless DC motor 1 of Fig. 1 comprises a stator 10 consisting of a lamination stack 11. The outer periphery of the lamination stack 11 having a circular cross section is coated with a protective coating 12, for example an epoxy coating. At the inner surface of the lamination stack 11, the stator coil 13 is provided. Between the lamination stack 11 and the stator coil 13, the stator 10 comprises an adhesive or glue 14 (for example an epoxy glue), and also comprises a dielectric isolation of the stator coil 13 against the lamination stack 11, for example in form of an insulating PEN film. Notably, the brushless DC motor 1 of the present invention no longer requires an outer housing tube that is indispensable for conventional brushless DC motors as the outer housing tube is conventionally needed as a reference for alignment during assembly of the motor. In the present invention, the lamination stack 11 functions as the housing which is, however, no longer needed as a reference for alignment.

A first flange 15, i.e. the front flange, is secured to the front end of the lamination stack 11, and a second flange 16, i.e., the rear flange is secured to the rear end of the lamination stack 11 as will be described in more detail below. Bearings 17 and 18 for journaling a machine shaft 19 are fitted in the two flanges 15 and 16. Bearings 17 and 18 are preferably press-fit onto the machine shaft 19 at or adjacent its opposite ends.

The machine shaft 19 carries magnets 20 (for example Neodymium) to form the rotor 21 of the DC motor 1. A grounding wire 22 is attached to the machine shaft 19 by means of screw 23. Within the space provided between rear flange 16 and coil 13 and rotor magnets, a temperature sensor 24 is preferably provided as well as circuitry (i.e., PCB), cable assembly, and one or more Hall sensors 25. Hall sensors 25 cooperate with additional magnets 26 mounted at the rear end of the shaft 19 as position sensor. The additional magnets 26 and the (main) magnets 20 are separated from each other by a balancing ring 27. Furthermore, a plastic spacer 28 is preferably provided to properly axially and radially space the electronics (PCB, Hall sensors) from the rotating shaft 19.

Furthermore, conductors 29 enter the rear flange 16 for excitation of the stator coil 13.

The brushless DC motor according to the present invention is assembled as follows. First, the front bearing 17 is press-fit onto the shaft 19 of the rotor. Furthermore, the front flange 15 is mounted on the front bearing 17. The rotor with the front bearing 17 and front flange 15 is then inserted into the stator 10. In the next step, the rear bearing 18 is press-fit onto the shaft 19 of the rotor, and rear flange 16 is attached to the bearing 18. The motor being such preassembled is then vertically placed on an alignment plate (x-/y-plate) such that the shaft axis extends in z-direction. In such position, the motor is operated at different speeds. During operation, noise and/or vibration levels are measured. The position bearings and shaft is concurrently modified in x- and y-direction until an optimum alignment position is achieved on the basis of the noise and/or vibration measurements. Once the optimum alignment position is reached, glue is added between the flanges 15 and 16 and the lamination stack 11, and the flanges 15 and 16 are thus fixed onto the lamination stack 11 of the stator 10. Alternatively, fixing is provided using laser welding.

## Claims

1. Assembly method of a brushless DC motor, comprising the steps:
(a) determining the optimum alignment position of the shaft with reference to the stator; and
(b) subsequently fixing the flanges to the stator of the motor at the determined optimum alignment position.

2. The method of claim 1, wherein step (a) is performed during operation of the motor.

3. The method of claim 1 or 2, wherein step (a) comprises the step of determining a noise and/or vibration profile for varying positions of the bearings and the shaft relative to the stator of the motor.

4. The method of claim 3, wherein the position of the bearings and shaft is varied in x-and y-direction with the axis of the shaft extending in z-direction.

5. The method of any of claims 1 to 4, wherein noise and/or vibration level is permanently measured.

6. The method of any of claims 2 to 5, wherein the motor is operated at different speeds.

7. The method of claim 1, wherein step (a) comprises the step of providing an axial guide element as an alignment reference.

8. The method of claim 7, wherein said axial guide element is provided in the air gap of the motor.

9. The method of claim 7, wherein said axial guide element is provided at the outside of the motor.

10. The method of any of claims 1 to 9, wherein the bearings are fixed to a respective flange, and the flanges are fixed to the stator.

11. The method of claim 10, wherein fixing is performed by means of a glue.

12. The method of any of claims 1 to 11, further comprising the step of baking the assembled and aligned motor in a oven.

13. The method of claim 10, wherein fixing is performed by laser welding.

14. Brushless DC motor comprising a stator, a rotor having a shaft sharing a common axis with the stator, a first and a second bearing for journaling the shaft of the rotor, and a first and a second end flange for mounting the first and second bearing to the stator, wherein the first and second end flanges and/or the first and second bearings are sized and shaped to provide freedom of radial and axial movement for alignment of the bearings and shaft.

15. The motor of claim 11, wherein the bearings are connected to the flanges prior to alignment.

16. The motor of claim 11 or 12, wherein the flanges are connected to the stator only after alignment.

17. The motor of claim 14, 15, or 16, wherein the first and second end flanges and/or the first and second bearings are sized and shaped to provide freedom of radial and axial movement for alignment of the bearings and shaft during rotation of the shaft.
